# FASCICULE DE BREVET EUROPEEN

(11) **EP 2 890 906 B1**
(45) Date de publication et mention de la délivrance du brevet: **05.10.2016**
(21) Numéro de dépôt: 13742208.5
(22) Date de dépôt: 25.07.2013
(51) Int. Cl.: F16B 37/08, F16B 37/02

(54) **BAGUE DE FIXATION D'UNE TIGE SUR UN SUPPORT ET ASSEMBLAGE OBTENU**
BUCHSE ZUR BEFESTIGUNG EINES BOLZENS AN EINEM TRÄGER UND ENTSPRECHENDE ANORDNUNG
RING FOR ATTACHING A BOLT TO A SUPPORT AND ASSEMBLY OBTAINED

(30) Priorité: 28.08.2012 FR 1258031
(43) Date de publication de la demande: 08.07.2015
(73) Titulaire: A. Raymond et Cie, 38000 Grenoble (FR)
(72) Inventeur: BIZZINI, Olivier, F-38120 Saint Egrève (FR)
(74) Mandataire: Prugneau, Philippe
(86) Numéro de dépôt international: PCT/EP2013/065715
(87) Numéro de publication internationale: WO 2014/032873

(56) Documents cités:
- WO-A1-99/08006
- DE-A1- 3 600 311
- DE-A1-102010 018 091
- DE-U1-202007 013 238

## Description

### Domaine technique

L'invention concerne de façon générale le domaine de la fixation provisoire, en particulier la fixation provisoire de réservoir de carburant sur une tige solidaire d'un châssis de véhicule automobile avant la fixation définitive du réservoir. L'invention concerne plus particulièrement une bague de fixation pour tige, comportant un corps traversé par un orifice axial destiné à recevoir la tige, et des pattes flexibles s'étendant radialement du corps vers l'axe principal de l'orifice axial et destinées à coopérer avec la tige pour l'immobiliser axialement par rapport à la bague de fixation. L'invention concerne également un assemblage d'une pièce d'assemblage sur un support pourvu d'au moins une tige.

### Technique antérieure

Il existe de nombreuses bagues de fixation de ce type.

La publication DE 20 2007 013 238 décrit une bague de fixation comportant, selon l'un de ses modes de réalisation, un jeu de six premières pattes flexibles prévues en une extrémité axiale du corps et un ou plusieurs jeux de quatre secondes pattes, axialement décalées par rapport aux premières pattes. Les extrémités libres des secondes pattes présentent une forme en "C" ou en "V" dont le creux est orienté radialement et dont les extrémités forment des pointes destinées à s'engager dans les filets ou crans d'une tige filetée ou crantée pour l'immobiliser axialement. Lors de l'utilisation de cette bague de fixation, l'axe central de la tige est nécessairement coaxial à l'axe principal de la bague. Aussi, pour que la bague de fixation puisse recevoir la tige et la bloquer, le positionnement de l'axe central de la tige doit être précis ce qui est peu compatible avec les dispersions dimensionnelles liées aux procédés de fabrication des réservoirs en matériau plastique.

La publication JP 2005 076 646 décrit une bague de fixation qui comporte un jeu de quatre pattes flexibles et présente les mêmes inconvénients que la précédente.

La publication EP 1 472 464 décrit une bague de fixation qui comporte deux pattes flexibles présentant chacune une pluralité de crans s'étendant transversalement, perpendiculairement à l'axe principal de la bague de fixation et dans un plan radial. Ainsi, cette bague de fixation tolère une dispersion de la position transversale de la tige dans une direction unique. Cette bague de fixation ne permet donc pas de répondre pleinement au problème rencontré.

### Exposé de l'invention

Le but de l'invention est de remédier à ces inconvénients en proposant une bague de fixation facile à réaliser, acceptant les dispersions de positionnement de l'axe central de la tige à maintenir par rapport à l'axe principal de la bague de fixation, et permettant d'assurer une fixation provisoire efficace d'une pièce à assembler sur un support.

A cet effet, l'invention a pour objet une bague de fixation d'une tige sur un support, comportant un corps traversé par un orifice axial destiné à recevoir la tige, et des pattes flexibles s'étendant radialement du corps vers l'axe principal de l'orifice axial et destinées à coopérer avec la tige pour l'immobiliser axialement par rapport à la bague de fixation, caractérisé en ce que les pattes flexibles comportent un jeu de pattes étoilées pourvues chacune d'une languette solidaire du corps, et prolongée par une tête étoilée formée d'une extrémité radiale arrondie et de deux joues latérales arrondies radialement distantes du corps, la largeur de la languette étant inférieure à la largeur maximale de la tête étoilée entre les bords les plus éloignés de ses joues latérales.

L'idée à la base de l'invention est d'utiliser une bague dont la forme des ailettes étoilées favorise le contact avec la tige et autorise une position axiale de la tige décalée par rapport à l'axe principal de la bague de fixation. Le fait que les joues radiales soient plus larges que la languette crée un espace, à l'arrière des joues radiales, pouvant accueillir la tige lorsqu'elle est axialement décalée.

La bague de fixation selon l'invention peut avantageusement présenter les particularités suivantes :
- l'extrémité radiale est reliée à chaque joue latérale par un renfoncement incurvé et concave. Ce renfoncement permet d'augmenter la surface de contact entre la bague de fixation et la tige lorsque l'axe central de la tige est axialement décalé par rapport à l'axe principal de la bague de fixation ;
- l'extrémité radiale forme un pli par rapport à la languette et aux joues latérales pour présenter une inclinaison accentuée par rapport à l'axe principal. Ce pli favorise l'engagement de l'extrémité radiale dans les crans ou filets de la tige ;
- les pattes flexibles comportent un jeu de premières pattes complémentaires angulairement décalées aux pattes étoilées par rapport à l'axe principal, et axialement décalées des pattes étoilées le long de l'axe principal ;
- les pattes flexibles comportent un jeu de secondes pattes complémentaires axialement décalées des premières pattes complémentaires. Les premier et second jeux de pattes complémentaires permettent d'occuper au maximum l'orifice axial. Ainsi, quelle que soit la position axiale de la tige, celle-ci coopère avec l'une ou l'autre des pattes flexibles permettant de garantir la fixation provisoire entre la tige et la bague de fixation ;
- les pattes flexibles d'au moins l'un des jeux présentent une longueur radiale différente de celle des pattes flexibles d'un autre jeu. Ainsi, les points de contact potentiels de la bague de fixation avec la tige sont à des distances variables de l'axe principal de la bague de fixation, multipliant ainsi les positions axiales possibles pour la tige ;
- les pattes flexibles d'au moins l'un des jeux sont coplanaires entre elles ;
- les extrémités libres des pattes étoilées sont situées dans un plan de contact principal, les extrémités libres d'au moins les premières pattes complémentaires ou des secondes pattes complémentaires sont respectivement situées dans un premier plan de contact, second plan de contact, distinct du plan de contact principal.

L'invention s'étend à un assemblage d'une pièce d'assemblage sur un support pourvu d'au moins une tige, caractérisé en ce que la pièce d'assemblage est solidaire d'au moins une bague de fixation telle que précédemment décrite, cette bague de fixation étant emmanchée sur la tige pour fixer la pièce d'assemblage au support.

### Présentation sommaire des dessins

La présente invention sera mieux comprise et d'autres avantages apparaîtront à la lecture de la description détaillée de deux modes de réalisation pris à titre d'exemples nullement limitatifs et illustrés par les dessins annexés, dans lesquels :
- la figure 1 est une vue en perspective d'une bague de fixation selon un premier mode de réalisation de l'invention ;
- la figure 2 est une vue de dessus de détail d'une patte étoilée de la bague de fixation de la figure 1 ;
- la figure 3 est une vue en coupe partielle de coté de la bague de fixation de la figure 1 ;
- les figures 4A à 4E sont des vues de dessus illustrant les différentes positions de la tige dans la bague de fixation de la figure 1 ;
- la figure 5 est une vue en perspective d'une bague de fixation selon un second mode de réalisation de l'invention ;
- la figure 6 et 7 sont respectivement une vue en perspective coupée et une vue de dessus de la bague de fixation de la figure 5 ;
- les figures 8 et 9 sont des vues d'assemblages selon l'invention, réalisés avec des bagues de fixation respectivement selon le premier et le second mode de réalisation, les bagues de fixation étant représentées en trait noir renforcé.

### Description des modes de réalisation

La bague de fixation selon l'invention permet la fixation d'une pièce d'assemblage, par exemple d'un réservoir de carburant, sur un support, par exemple un châssis de véhicule automobile. Pour faciliter les étapes d'assemblage du réservoir sur le châssis, le réservoir peut être fixé de manière provisoire au châssis dans l'attente de sa fixation définitive. Pour ce faire, le châssis est pourvu d'une tige qui peut être lisse, filetée ou crantée, et le réservoir est pourvu de la bague de fixation décrite ci-après, apte à recevoir et bloquer la tige.

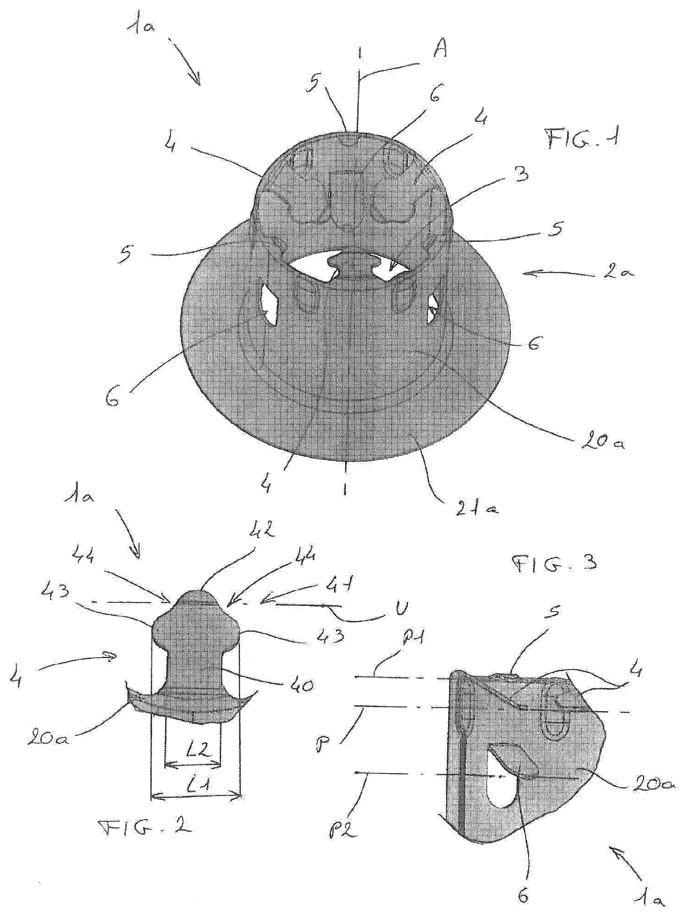

Selon le premier mode de réalisation illustré par les figures 1 à 4E et 8, la bague de fixation 1a selon l'invention comporte un corps 2a sensiblement cylindrique traversé par un orifice axial 3 orienté selon l'axe principal A. Le corps 2a est formé d'un fût 20a sensiblement cylindrique et d'un disque radial 21a solidaire d'une première extrémité du fût 20a et s'étendant vers l'extérieur de l'orifice axial 3. Comme détaillé plus loin, le disque radial 21a permet la solidarisation de la bague de fixation 1a, par exemple à un réservoir par tout moyen adapté connu.

La seconde extrémité du fût 20a est pourvue de trois pattes étoilées 4 sensiblement similaires entre elles, orientées vers l'axe principal A. Les pattes étoilées 4 sont par ailleurs inclinées vers l'intérieur du fût 20a et angulairement réparties sur la périphérie de ce fût 20a autour de l'axe principal A. Tel que détaillé sur la figure 2, chaque patte étoilée 4 comporte une languette 40 solidaire du fût 20a prolongée par une tête étoilée 41. Chaque tête étoilée 41 comporte une extrémité radiale 42 arrondie orientée vers l'axe principal A et deux joues latérales 43 arrondies s'étendant transversalement de part et d'autre de la languette 40. Ainsi, la largeur maximale L1 de la tête étoilée 41 séparant les bords les plus éloignés des joues latérales 43 est supérieure à la largeur L2 de la languette 40. Les extrémités radiales 42 sont inclinées par rapport à la languette 40 le long d'une ligne de pliage U de sorte à présenter un angle d'inclinaison supérieur par rapport à l'axe principal A et favorisant la coopération avec la tige (non représentée sur la figure 2). L'extrémité radiale 42 est par ailleurs reliée à chaque joue latérale 43 par un renfoncement 44 incurvé et concave favorisant également la coopération avec la tige. Tel qu'illustré sur la figure 3, avant assemblage, les extrémités radiales 42 sont alignées dans un plan de contact principal P perpendiculaire à l'axe principal A.

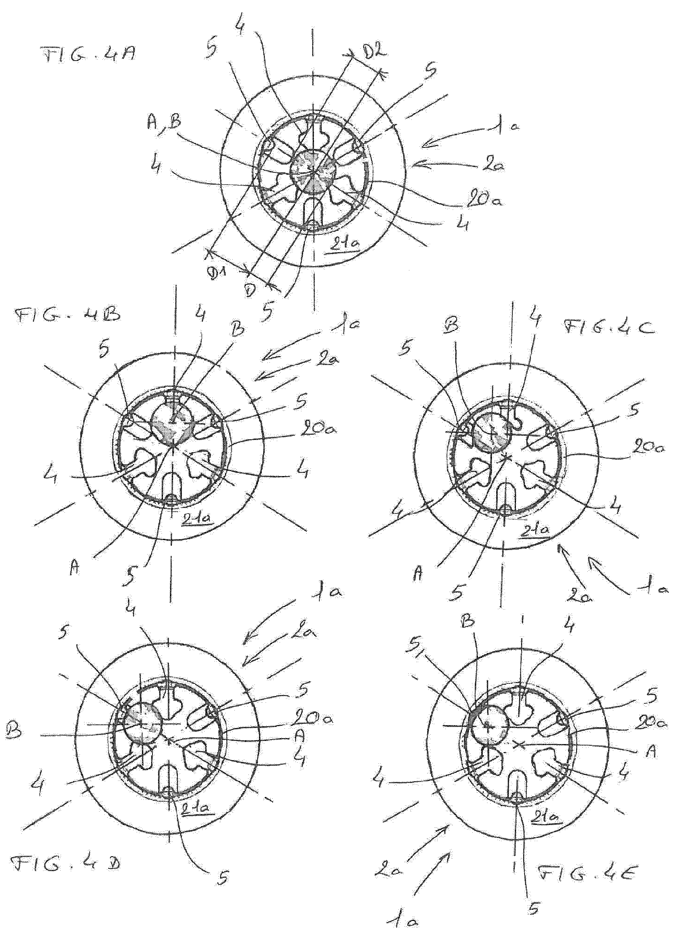

La seconde extrémité du fût 20a est également pourvue de trois premières pattes complémentaires 5 sensiblement similaires entre elles, orientées vers l'axe principal A. L'extrémité libre de chaque première patte complémentaire 5 est arrondie. Les premières pattes complémentaires 5 sont par ailleurs inclinées vers l'intérieur du fût 20a. Elles présentent une longueur radiale inférieure à celle des pattes étoilées 4 avec lesquelles elles sont angulairement intercalées. Ainsi, tel qu'illustré sur la figure 4A, la distance D1 séparant l'extrémité libre des premières pattes complémentaires 5 et l'axe principal A est supérieure à la distance D séparant l'extrémité libre des pattes étoilées 4 et le même axe principal A. Cette différence de longueur radiale et le décalage angulaire contribuent à la possibilité pour la tige d'occuper différentes positions axiales détaillées plus loin. Avant assemblage, les extrémités libres des premières pattes complémentaires 5 sont alignées dans un premier plan de contact P1 perpendiculaire à l'axe principal A et distinct du plan de contact principal P.

Entre ses première et seconde extrémités, le fût 20a est également pourvu de trois secondes pattes complémentaires 6 sensiblement similaires entre elles, orientées vers l'axe principal A. Les secondes pattes complémentaires 6 sont par ailleurs inclinées vers l'intérieur du fût 20a et obtenues par découpe et pliage de la paroi du fût 20a. Les secondes pattes complémentaires 6 présentent une longueur radiale légèrement inférieure à celle des pattes étoilées 4 et supérieure à celle des premières pattes complémentaires 5. Ainsi, la distance D2 séparant l'extrémité libre des secondes pattes complémentaires 6 et l'axe principal A est supérieure à la distance séparant l'extrémité libre des pattes étoilées 4 et l'axe principal A, et inférieure à la distance séparant l'extrémité libre des premières pattes complémentaires 5 et le même axe principal A. Cette différence de longueur radiale contribue à la possibilité pour la tige d'occuper les différentes positions axiales. Les secondes pattes complémentaires 6 sont angulairement alignées avec les premières pattes complémentaires 5. L'extrémité libre de chaque seconde patte complémentaire 6 est arrondie. Avant assemblage, les extrémités libres des secondes pattes complémentaires 6 sont alignées dans un second plan de contact P2 perpendiculaire à l'axe principal A et distinct du plan de contact principal P et du premier plan de contact P1 de sorte que le plan de contact principal P est situé entre le premier plan de contact P1 et le second plan de contact P2.

La disposition des pattes étoilées 4, premières pattes complémentaires 5 et secondes pattes complémentaires 6 peut être différente. Ainsi, les secondes pattes complémentaires 6 peuvent être angulairement alignées aux pattes étoilées 4. De plus, le nombre de pattes étoilées 4, de premières pattes complémentaires 5 et de secondes pattes complémentaires 6 peut être différent. Les secondes pattes complémentaires 6 peuvent également être prévues plus courtes que les premières pattes complémentaires 5.

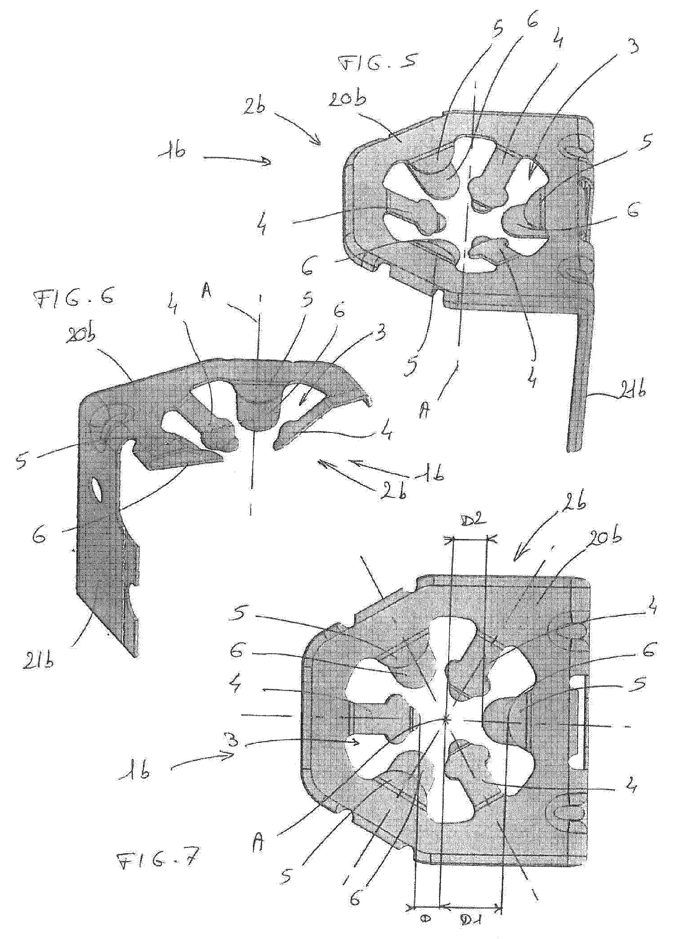

Selon le second mode de réalisation illustré par les figures 5 à 7 et 9, la bague de fixation 1b selon l'invention comporte un corps 2b traversé par un orifice axial 3 orienté selon l'axe principal A. Le corps 2b est formé d'une plaque pliée dont les première et seconde ailes 20b, 21 b définissent un V à angle droit. La première aile 20b est traversée par l'orifice axial 3 et la seconde aile 21b permet la solidarisation de la bague de fixation 1 b, par exemple au réservoir, par tout moyen adapté connu.

La première aile 20b est pourvue de trois pattes étoilées 4 sensiblement similaires aux précédentes s'étendant du bord de l'orifice axial 3 vers l'axe principal A. De plus, la première aile 20b est pourvue de trois premières pattes complémentaires 5 et de trois secondes pattes complémentaires 6 sensiblement similaires aux précédentes et disposées de manière semblable.

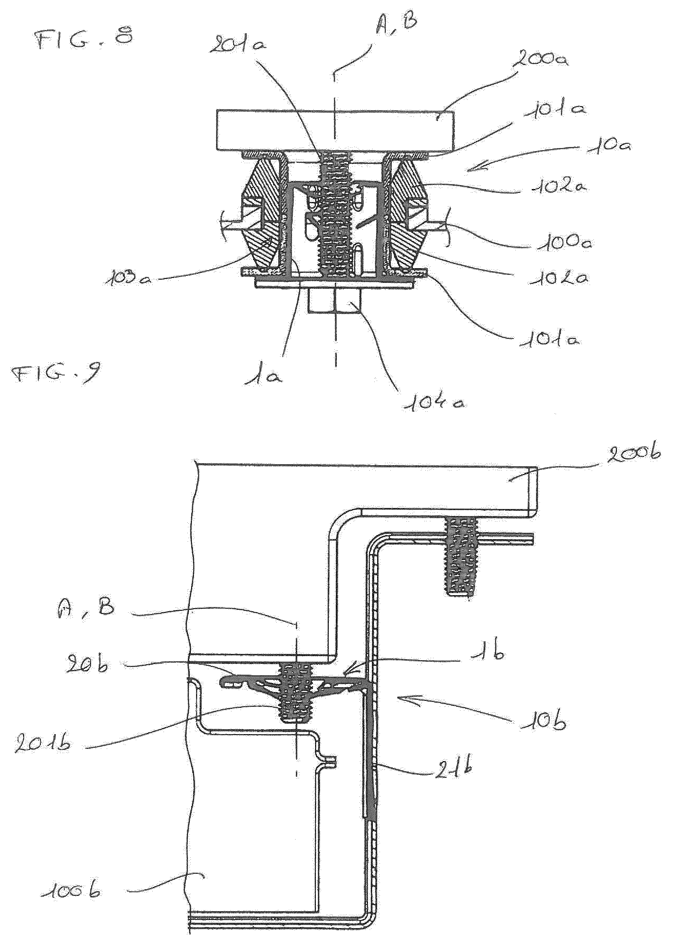

Les figures 8 et 9 illustrent deux assemblages 10b, 10b obtenus avec les bagues de fixation 1a, 1b respectivement des premier et second modes de réalisation des figures précédentes. Dans ces exemples il s'agit de l'assemblage d'un réservoir 100a, 100b de carburant sur un châssis 200a, 200b de véhicule automobile. Le châssis 200a, 200b pourvu de tiges 201 a, 201b par exemple de type goujons et fixées par soudure. Ainsi le positionnement des tiges 201a, 202b peut être précis. Les tiges 201a, 201b sont fixées perpendiculairement à la surface du châssis 200a, 200b. Le réservoir 100a, 100b de présente des dimensions importantes et est réalisé en matériau plastique. Ainsi, il présente des dispersions dimensionnelles importantes.

Pour réaliser l'un ou l'autre des assemblages 10a, 10b, on procède comme suit. Au cours d'une première étape, on équipe le réservoir 100a, 100b de plusieurs bagues de fixation 1a, 1b de sorte que la position théorique des bagues de fixation 1a, 1b coïncide au plus près avec la position des axes centraux B des tiges 201a, 201b lorsque le réservoir 100a, 100b est dans sa position prédéterminée par rapport au châssis 200a, 200b. A cause des dispersions dimensionnelles les axes principaux A des bagues de fixation 1a, 1b sont souvent décalés par rapport aux positions théoriques et donc aux axes centraux B des tiges 201a, 201b. Au cours d'une seconde étape, on place le réservoir 100a, 100b dans sa position prédéterminée en engageant les tiges 201a, 201b dans les bagues de fixation 1a, 1b. Cet engagement est rendu possible par la construction spécifique des bagues de fixation 1a, 1b qui acceptent le décalage axial des tiges 201a, 201b par rapport à leur axe principal A respectif. Le réservoir 100a, 100b est ainsi pré-maintenu sur le châssis 200a, 200b et peut alors être transféré sur un autre poste de travail au niveau duquel sa fixation définitive au châssis 200a, 200b est réalisée, par exemple par vissage.

Lorsque la tige 201a, 201b est filetée ou crantée, sa coopération entre les pattes étoilées 4, les premières et secondes pattes complémentaires 5, 6 est renforcée par leurs extrémités s'engageant entre les filets ou les crans de la tige 201a, 201b. L'assemblage 10a, 10b obtenu présente ainsi une meilleure tenue à l'arrachement.

Dans l'exemple illustré par la figure 8, le châssis 200a est pourvu d'une tige 201a filetée. La bague de fixation 1a est logée dans un orifice traversant deux bagues de fluage 101a disposées de part et d'autre de bagues d'amortissement 102a (ou silent bloc) encadrant un orifice 103a prévu dans le réservoir 100a. Ainsi, le disque radial 21a est en appui contre l'une des bagues de fluage 101a. L'assemblage 10a obtenu est consolidé au moyen d'un écrou 104a vissé sur la tige 201a fileté, au-delà de la bague de fixation 1a.

Dans l'exemple illustré par la figure 9, le châssis 200b est également pourvu d'une tige 201b filetée. La seconde aile 21b de la bague de fixation 1b est solidarisée au réservoir 100b, par exemple par soudure.

La forme particulière des pattes étoilées 4 ainsi que la présence et la position des premières et secondes pattes complémentaires 5, 6 permet de garantir un contact maximal entre chaque bague de fixation 1a, 1b et la tige 201a, 201b correspondante, ceci dans une pluralité de positions axiales de la tige 201a, 201b par rapport à la bague de fixation 1a, 1b.

Lorsque les dispersions dimensionnelles sont minimes, la tige 201a occupe après assemblage une position centrale telle qu'illustrée par la figure 4A. Dans cette configuration, l'axe principal A de la bague de fixation 1a et l'axe central B de la tige 201a sont sensiblement coaxiaux. En cas de dispersions dimensionnelles plus importantes, la tige 201a peut occuper l'une des positions illustrées par les figures 4B à 4E ou toute autre position dans laquelle l'axe principal A de la bague de fixation 1a et l'axe central B de la tige 201a ne sont pas coaxiaux.

Dans la configuration illustrée par la figure 4B, la tige 201a est en contact avec une patte étoilée 4 et avec deux secondes pattes complémentaires 6 qui coopèrent pour assurer son maintien.

Dans la configuration illustrée par la figure 4C, la tige 201a est en contact avec une patte étoilée 4 et une seconde patte complémentaire 6.

Dans les configurations illustrées par les figures 4D et 4E, la tige 201 a est en contact avec deux pattes étoilées 4, une première patte complémentaire 5 et une seconde patte complémentaire 6.

L'invention permet d'atteindre les objectifs précédemment mentionnés. En effet, la bague de fixation 1a, 1b selon l'invention permet de rattraper des disparités dimensionnelles importantes du support et/ou de la pièce de fixation. A titre indicatif, une bague de fixation 1a, 1 b dont les dimensions du corps 2a, 2b sont d'environ 25 à 30 mm peut ainsi tolérer un décalage de 7 mm de l'axe central B d'une tige 201a, 201b de diamètre 8 mm par rapport à son axe principal A.

Il va de soi que la présente invention ne saurait être limitée à la description qui précède de deux de ses modes de réalisation, susceptibles de subir quelques modifications sans pour autant sortir du cadre de l'invention.

## Revendications

1. Bague de fixation (1a, 1b) d'une tige (201a, 202b) sur un support (200a, 200b), comportant un corps (2a, 2b) traversé par un orifice axial (3) destiné à recevoir ladite tige (201a, 202b), et des pattes flexibles (4, 5, 6) s'étendant radialement dudit corps (2a, 2b) vers l'axe principal (A) dudit orifice axial (3) et destinées à coopérer avec ladite tige (201a, 202b) pour l'immobiliser axialement par rapport à ladite bague de fixation (1a, 1b), **caractérisé en ce que** lesdites pattes flexibles (4, 5, 6) comportent un jeu de pattes étoilées (4) pourvues chacune d'une languette (40) solidaire dudit corps (2a, 2b), et prolongée par une tête étoilée (41) formée d'une extrémité radiale (42) arrondie et de deux joues latérales (43) arrondies radialement distantes dudit corps (2a, 2b), la largeur (L2) de ladite languette (40) étant inférieure à la largeur maximale (L1) de ladite tête étoilée (41) entre les bords les plus éloignés de ses joues latérales (43).

2. Bague de fixation (1a, 1b) selon la revendication 1, **caractérisé en ce que** ladite extrémité radiale (42) est reliée à chaque joue latérale (43) par un renfoncement (44) incurvé et concave.

3. Bague de fixation (1a, 1b) selon la revendication 1, **caractérisé en ce que** ladite extrémité radiale (42) forme un pli par rapport à ladite languette (40) et auxdites joues latérales (43) pour présenter une inclinaison accentuée par rapport audit axe principal (A).

4. Bague de fixation (1a, 1b) selon la revendication 1, **caractérisé en ce que** lesdites pattes flexibles (4, 5, 6) comportent un jeu de premières pattes complémentaires (5) angulairement décalées desdites pattes étoilées (4) par rapport audit axe principal (A), et axialement décalées desdites pattes étoilées (4) le long dudit axe principal (A).

5. Bague de fixation (1a, 1b) selon la revendication 4, **caractérisé en ce que** lesdites pattes flexibles (4, 5, 6) comportent un jeu de secondes pattes complémentaires (6) axialement décalées desdites premières pattes complémentaires (5).

6. Bague de fixation (1 a, 1 b) selon l'une des revendications 4 ou 5, **caractérisé en ce que** lesdites pattes flexibles (4, 5, 6) d'au moins l'un desdits jeux présentent une longueur radiale différentes de celle des pattes flexibles (4, 5, 6) d'un autre jeu.

7. Bague de fixation (1a, 1b) selon l'une des revendications 4 ou 5, **caractérisé en ce que** lesdites pattes flexibles (4, 5, 6) d'au moins l'un desdits jeux sont coplanaires entre elles.

8. Bague de fixation (1a, 1b) selon l'une des revendications 4 ou 5, **caractérisé en ce que** les extrémités libres desdites pattes étoilées (4) sont situées dans un plan de contact principal (P), **en ce que** les extrémités libres d'au moins lesdites premières pattes complémentaires (5) ou desdites secondes pattes complémentaires (6) sont respectivement situées dans un premier plan de contact (P1), second plan de contact (P2), distinct dudit plan de contact principal (P)

9. Assemblage (10a, 10b) d'une pièce d'assemblage (100a, 100b) sur un support (200a, 200b) pourvu d'au moins une tige (201 a, 201 b), **caractérisé en ce que** ladite pièce d'assemblage (100a, 100b) est solidaire d'au moins une bague de fixation (1a, 1b) selon l'une quelconque des revendications précédentes, ladite bague de fixation (1a, 1b) étant emmanchée sur ladite tige (201a, 202b) pour fixer ladite pièce d'assemblage (100a, 100b) audit support (200a, 200b).

## Patentansprüche

1. Ring zur Befestigung (1a, 1b) einer Stange (201 a, 202b) auf einem Träger (200a, 200b), umfassend einen Körper (2a, 2b), der von einer Axialöffnung (3) durchquert wird, die dazu bestimmt ist, die Stange (201a, 202b) aufzunehmen, und flexible Laschen (4, 5, 6), die sich radial zum Körper (2a, 2b) zur Hauptachse (A) der Axialöffnung (3) erstrecken und dazu bestimmt sind, um mit der Stange (201a, 202b) zusammenzuwirken, um sie axial in Bezug zum Ring zur Befestigung (1a, 1b) festzustellen, **dadurch gekennzeichnet, dass** die flexiblen Laschen (4, 5, 6) einen Satz von Sternlaschen (4) umfassen, die jeweils mit einer Zunge (40) versehen sind, die mit dem Körper (2a, 2b) verbunden ist und durch einen Sternkopf (41) verlängert ist, der von einem abgerundeten radialen Ende (42) und zwei abgerundeten Seitenwangen (43), die zum Körper (2a, 2b) beabstandet sind, gebildet ist, wobei die Breite (L2) der Zunge (40) kleiner als die maximale Breite (L1) des Sternkopf (41) zwischen den am weitesten beabstandeten Rändern ihrer Seitenwangen (43) ist.

2. Ring zur Befestigung (1a, 1b) nach Anspruch 1, **dadurch gekennzeichnet, dass** das radiale Ende (42) mit jeder Seitenwange (43) durch eine gebogene oder konkave Verstärkung (44) verbunden ist.

3. Ring zur Befestigung (1a, 1b) nach Anspruch 1, **dadurch gekennzeichnet, dass** das radiale Ende (42) einen Falz in Bezug zu der Zunge (40) und zu den Seitenwangen (43) bildet, um eine verstärkte Neigung in Bezug zur Hauptachse (A) aufzuweisen.

4. Ring zur Befestigung (1a, 1b) nach Anspruch 1, **dadurch gekennzeichnet, dass** die flexiblen Laschen (4, 5, 6) einen Satz von ersten komplementären Laschen (5) umfassen, die winklig zu den Sternlaschen (4) in Bezug zur Hauptachse (A) versetzt sind und axial zu den Sternlaschen (4) entlang der Hauptachse (A) versetzt sind.

5. Ring zur Befestigung (1a, 1b) nach Anspruch 4, **dadurch gekennzeichnet, dass** die flexiblen Laschen (4, 5, 6) einen Satz von zweiten komplementären Laschen (6) umfassen, die axial zu den ersten komplementären Laschen (5) versetzt sind.

6. Ring zur Befestigung (1a, 1b) nach einem der Ansprüche 4 oder 5, **dadurch gekennzeichnet, dass** die flexiblen Laschen (4, 5, 6) von mindestens einem der Sätze eine unterschiedliche radiale Länge zu jener der flexiblen Laschen (4, 5, 6) eines anderen Satzes aufweisen.

7. Ring zur Befestigung (1a, 1b) nach einem der Ansprüche 4 oder 5, **dadurch gekennzeichnet, dass** die flexiblen Laschen (4, 5, 6) von mindestens einem der Sätze zueinander koplanar sind.

8. Ring zur Befestigung (1a, 1b) nach einem der Ansprüche 4 oder 5, **dadurch gekennzeichnet, dass** die freien Enden der Sternlaschen (4) in einer Hauptkontaktebene (P) angeordnet sind, dass die freien Enden mindestens der ersten komplementären Laschen (5) oder der zweiten komplementären Laschen (6) jeweils in einer ersten Kontaktebene (P1), zweiten Kontaktebene (P2), die zur Hauptkontaktebene (P) unterschiedlich sind, angeordnet sind.

9. Anordnung (10a, 10b) eines Montageteils (100a, 100b) auf einem Träger (200a, 200b), der mit mindestens einer Stange (201 a, 201b) versehen ist, **dadurch gekennzeichnet, dass** das Montageteil (100a, 100b) mit mindestens einem Ring zur Befestigung (1a, 1b) nach einem der vorhergehenden Ansprüche verbunden ist, wobei der Ring zur Befestigung (1a, 1b) auf die Stange (201a, 202b) aufgesteckt ist, um das Montageteil (100a, 100b) am Träger (200a, 200b) zu befestigen.

## Claims

1. A fastener ring (1a, 1b) for fastening to a rod (201a, 202b) on a support (200a, 200b), which fastener ring comprises both a body (2a, 2b) through which an axial orifice (3) passes that serves to receive said rod (201a, 202b), and flexible tabs (4, 5, 6) extending radially from the body (2a, 2b) towards the main axis (A) of said axial orifice (3) and serving to co-operate with said rod (201a, 202b) to hold it stationary axially relative to said fastener ring (1a, 1b), said fastener ring being **characterized in that** said flexible tabs (4, 5, 6) include a set of star-shaped tabs (4), each of which comprises a tongue (40) secured to said body (2a, 2b), and extended by a star-shaped head (41) made up of a rounded radial tip (42) and of two radially rounded side cheeks (43) remote from said body (2a, 2b), the width (L2) of said tongue (40) being less than the maximum width (L1) of said star-shaped head (41) as measured between the furthest apart edges of its side cheeks (43).

2. A fastener ring (1a, 1b) according to claim 1, **characterized in that** said radial tip (42) is connected to each side cheek (43) via a curved and concave setback (44).

3. A fastener ring (1a, 1b) according to claim 1, **characterized in that** said radial tip (42) forms a fold relative to said tongue (40) and to said side cheeks (43) so as to have an inclination that is accentuated relative to said main axis (A).

4. A fastener ring (1a, 1b) according to claim 1, **characterized in that** said flexible tabs (4, 5, 6) include a set of first additional tabs (5) that are offset angularly from said star-shaped tabs (4) relative to said main axis (A), and offset axially from said star-shaped tabs (4) along said main axis (A).

5. A fastener ring (1a, 1b) according to claim 4, **characterized in that** said flexible tabs (4, 5, 6) include a set of second additional tabs (6) that are offset axially from said first additional tabs (5).

6. A fastener ring (1a, 1b) according to claim 4 or claim 5, **characterized in that** said flexible tabs (4, 5, 6) of at least one of said sets has a radial length that is different from the radial length of the flexible tabs (4, 5, 6) of another set.

7. A fastener ring (1a, 1b) according to claim 4 or claim 5, **characterized in that** said flexible tabs (4, 5, 6) of at least one of said sets are mutually coplanar.

8. A fastener ring (1a, 1b) according to claim 4 or claim 5, **characterized in that** the free ends of said star-shaped tabs (4) are situated in a main contact plane (P), and **in that** the free ends of at least said first additional tabs (5) or of at least said second additional tabs (6) are situated in a contact plane that is distinct from said main contact plane (P), namely, respectively, a first contact plane (P1) or a second contact plane (P2).

9. An assembly (10a, 10b) comprising a part for assembly (100a, 100b) as assembled to a support (200a, 200b) that is provided with at least one rod (201a, 201b), said assembly being **characterized in that** said part for assembly (100a, 100b) is secured to at least one fastening ring (1a, 1b) according to any preceding claim, said fastening ring (1a, 1b) being engaged over said rod (201a, 201b) so as to fasten said part for assembly (100a, 100b) to said support (200a, 200b).
